# EUROPEAN PATENT APPLICATION

(11) **EP 4 550 606 A1**
(43) Date of publication of application: **07.05.2025**
(21) Application number: 23208012.7
(22) Date of filing: 06.11.2023
(51) Int. Cl.: H02J 3/36, B63B 35/44, H02M 1/32

(54) **IMPROVEMENTS RELATING TO OFFSHORE CONVERTER PLATFORMS IN POWER TRANSMISSION NETWORKS**

(71) Applicant: General Electric Technology GmbH, 5400 Baden (CH)
(72) Inventor: KUMAR, Amit, Stafford ST16 1WS (GB)
(74) Representative: Openshaw & Co.

(57) **Abstract**

There is provided a topside platform (402) for a voltage source converter high voltage direct current, VSC HVDC, symmetrical monopole offshore converter station, the topside platform (402) comprising: a first floor (404) and a second floor (405), an incoming AC switchgear module (454) and first and second transformer modules (446, 448), wherein the incoming AC switchgear module (454) is configured to distribute a first alternating current, AC, signal from an AC grid to the first and second transformer modules (446, 448), wherein the first and second transformer modules (446, 448) are arranged on the first floor (404) of the topside platform (402) and are configured to transform the first AC signal into a second AC signal; and first and second converter modules (410, 412) configured to convert the second AC signal into a direct current, DC, signal for a DC circuit, wherein the first and second converter modules (410, 412) are positioned on the second floor (405) of the topside platform (402), wherein the incoming AC switchgear module (454) is positioned between the first and second converter modules (410, 412).

## Description

### Field

The subject matter herein relates generally to the field of power transmission networks and more specifically to offshore converter platforms in power transmission networks.

### Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

A HVDC power transmission network may comprise one or more offshore HVDC converter platforms. Offshore HVDC converter platforms have emerged as key components in the integration of renewable energy into the global power grid. Offshore HVDC converter platforms receive the electricity generated by the offshore wind turbines in the form of alternating current (AC). One of the primary functions of the platform is to convert this AC power into high-voltage direct current (DC). This conversion is crucial for renewable energy transmission system. These structures serve as the linchpin for transmitting electricity generated from offshore wind farms and other renewable sources to onshore grids efficiently and reliably.

There remains an ongoing requirement for further developments in this field.

### Summary

An offshore HVDC converter typically comprises several high voltage and auxiliary equipment mounted onto a topside platform. This equipment is arranged in different rooms, are called modules, which are interconnected to each other via electrical and/or mechanical interface, to achieve the desired operation of offshore HVDC converter platform. The topside platform may be mounted on top of a support structure such as a platform jacket. It is generally desirable to arrange the equipment on the topside platform such that the overall footprint, volume and/or weight of the platform in minimized.

According to a first aspect, there is provided a topside platform for a voltage source converter high voltage direct current, VSC HVDC, symmetrical monopole offshore converter station, the topside platform comprising: a first floor and a second floor, an incoming AC switchgear module first and second transformer modules and first and second converter modules, wherein the incoming AC switchgear module is configured to distribute a first alternating current, AC, signal from an AC grid to the first and second transformer modules, wherein the first and second transformer modules are arranged on the first floor of the topside platform and are configured to transform the first AC signal into a second AC signal; and first and second converter modules configured to convert the second AC signal into a direct current, DC, signal for a DC circuit, wherein the first and second converter modules are positioned on the second floor of the topside platform, wherein the incoming AC switchgear module is positioned between the first and second converter modules.

The first floor may be above, i.e., vertically above or on top of, the second floor.

Accordingly, the topside platform has a reduced overall footprint, volume and weight. Furthermore, the topside platform is easier to fabricate, transport and install thereby providing a more economical overall solution.

It will be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:
Figure 1 shows generically, an example of a power transmission network;
Figure 2 shows a schematic diagram of a configuration of an offshore HVDC converter system, according to one or more embodiments.
Figure 3a shows an elevation view of an offshore HVDC converter platform, according to one or more embodiments.
Figure 3b shows a perspective view of a first floor of the offshore HVDC converter platform in Figure 3a, according to one or more embodiments.
Figure 4 shows a plan view of the second floor of the offshore HVDC converter platform in Figure 3a, according to one or more embodiments.
Figure 5 shows a perspective view of the offshore HVDC converter platform shown in Figure 3a, according to one or more embodiments.
Figure 6 shows an elevation view of an offshore HVDC converter platform, according to one or more embodiments.

### Detailed description

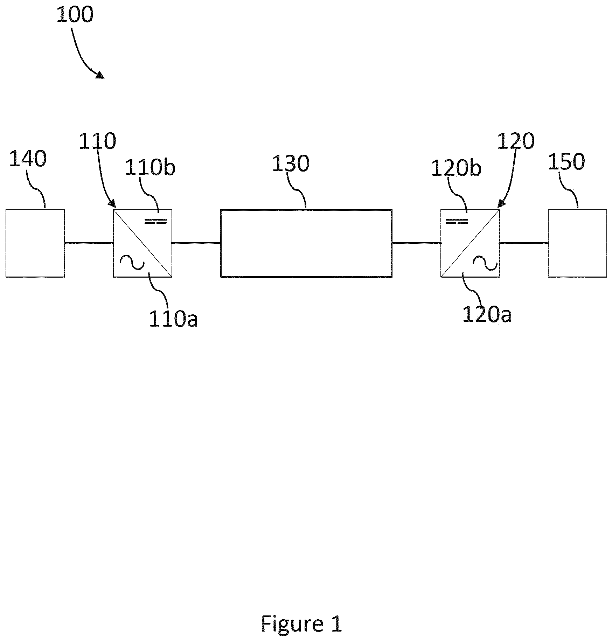

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising a controller, for instance.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means.

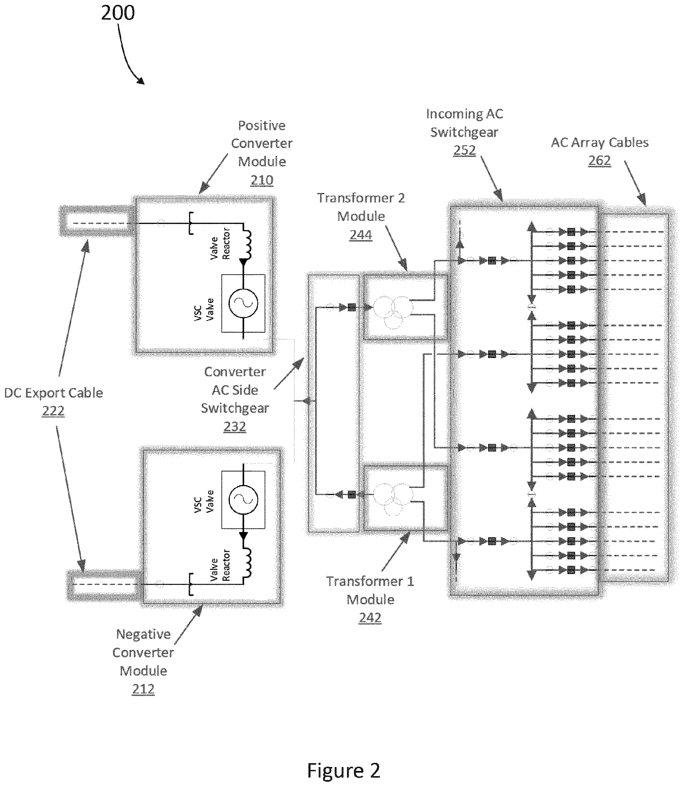

Figure 2 shows a schematic diagram of a system configuration for an offshore HVDC converter system, indicated generally by reference numeral 200, according to one or more embodiments.

The offshore HVDC converter system 200 may be a Voltage Source Converter (VSC) HVDC symmetrical monopole offshore converter station. The size of equipment and layout in offshore converter platform may be function of power and DC voltage level of the VSC HVDC system 200. The VSC HVDC system 200 comprises the following basic modules/rooms and/or components:
▪ AC Array Cables 262;
▪ Incoming AC switchgear 252 (for example, this may be configured for 66kV and/or 132kV power);
▪ Transformer 1 module 242;
▪ Transformer 2 module 244;
▪ Converter AC side Switchgear 232 (for example, this may be configured for 420kV AC for 320kV DC voltage or 550kV AC for 400kV DC voltage);
▪ Positive Converter Module 210 (which may comprise one or more of Converter Valves, Reactors and DC switchgear);
▪ Negative Converter Module 212 (which may comprise one or more of Converter Valves, Reactors and DC switchgear);
▪ DC Export Cables 222.

The VSC HVDC system 200 may further comprise:
▪ Converter Valve cooling rooms (not shown);
▪ Platform Cooling rooms - Sea Water, Fresh Water Cooling etc. (not shown);
▪ Air conditioning rooms (not shown);
▪ Electrical LV auxiliary rooms (not shown);
▪ C&P and Automation rooms (not shown).

The main circuit equipment electrical connections and switchgear arrangements may depend upon the operating circuit configuration requirement. Physically arranging the above modules on the topside platform equipment may depend on one or more of the following criteria/considerations:
▪ Reducing the overall footprint of the topside platform;
▪ Reducing the overall volume of the topside platform;
▪ Reducing the overall weight of the topside platform.
▪ Reducing the complexity of the fabrication of the offshore converter platform.
▪ To ensure the centre of gravity (or centre of mass) of the topside platform is positioned at (or close to) the geometrical centre of the topside platform.
▪ Ensuring the transportation and installation of the platform is safe and economical.
▪ Ensuring the equipment arrangement and connections fulfil the electrical main circuit connection requirement.
▪ Ensuring that there is sufficient maintenance, electrical and/or safety clearance between the equipment and electrical connections.
▪ Ensuring the station is safe to operate and maintain.
▪ Reducing the overall cost and time required to build converter station.
▪ Reducing overall losses and unavailability of scheme.

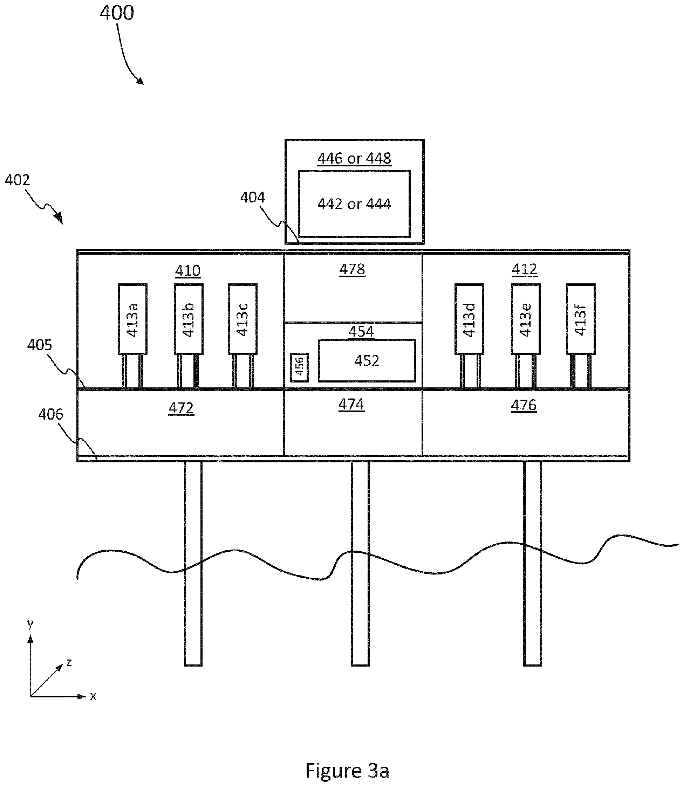

Figure 3a shows an elevation view of an offshore HVDC converter platform, indicated generally by reference numeral 400, according to one or more embodiments. According to some embodiments, the offshore HVDC converter platform 400 is a VSC HVDC symmetrical monopole offshore converter station 200 described above in relation to Figure 2.

The offshore HVDC converter platform 400 comprises a topside platform 402 mounted onto a support structure 403. The support structure 403 may be a platform jacket attached to or anchored to the sea floor.

The length of the topside platform 402 is the horizontal dimension of the topside platform 402 i.e., horizontally across the page of Figure 3a, i.e., along the x axis. The width of the topside platform 402 is the horizontal dimension of the topside platform 402 i.e., into the page of Figure 3a, i.e., along the z axis. The height of the topside platform 402 is the vertical dimension of the topside platform 402 i.e., the vertically up the page of Figure 3a, i.e., along the y axis.

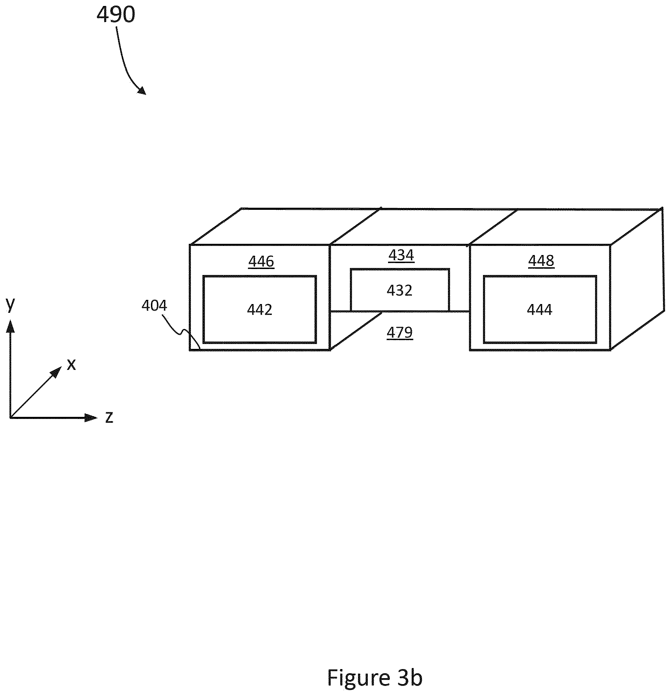

The topside platform 402 comprises a first floor 404 upon which the following module/rooms, electronic components and/or mechanical components are positioned:
▪ A first transformer module 446 comprising a first transformer 442;
▪ A second transformer module 448 comprising a second transformer 444;
▪ A converter AC side switchgear module (shown in Figure 3b and indicated by reference numeral 434) comprising a converter AC side Switchgear (shown in Figure 3b and indicated by reference numeral 432); and
▪ A module or space (shown in Figure 3b and indicated by reference numeral 479) which may be below the converter AC side switchgear module 434 and may be used for platform auxiliary components.

The converter AC side switchgear module 434 is positioned at the geometrical, horizontal, centre of the first floor 404. The first transformer module 446 and second transformer module 448 are positioned at either side of the converter AC side switchgear module 434. In other words, the converter AC side switchgear module 434 are sandwiched between the first transformer module 446 and second transformer module 448. From one side of the first floor 404, the modules are arranged (along the z axis) in the following order: 1) first transformer module 446; 2) the converter AC side switchgear module 434; 3) the second transformer module 448.

The length of the first transformer module 446 is the horizontal dimension of the first transformer module 446 i.e., along the z axis. The width of the first transformer module 446 is the horizontal dimension of the first transformer module 446 i.e., along the x axis. The height of the first transformer module 446 is the vertical dimension of the first transformer module 446 i.e., vertically up the page of Figure 3a, i.e., along the y axis.

The length of the second transformer module 448 is the horizontal dimension of the second transformer module 448 i.e., along the z axis. The width of the second transformer module 448 is the horizontal dimension of the second transformer module 448 i.e., along the x axis. The height of the second transformer module 448 is the vertical dimension of the second transformer module 448 i.e., vertically up the page of Figure 3a, i.e., along the y axis.

The length of the converter AC side switchgear module 434 is the dimension of the converter AC side switchgear module 434 i.e., along the z axis. The width of the converter AC side switchgear module 434 is the horizontal dimension of converter AC side switchgear module 434 i.e., along the x axis. The height of the converter AC side switchgear module 434 is the vertical dimension of the converter AC side switchgear module 434 i.e., vertically up the page of Figure 3a, i.e., along the y axis.

The topside platform 402 further comprises a second floor 405 upon which the following modules/rooms, electronic components and/or mechanical components and located:
▪ A first converter module (e.g. Converter + DC Yard Room 1) 410 comprising converter valves 413a to 413c;
▪ A second converter module (e.g. Converter + DC Yard Room 2) 412 comprising converter valves 413d to 413f;
▪ An incoming AC Switchgear module 454 (sometimes referred to as a Gas Insulated Switchgear (GIS) room) comprising an incoming AC switchgear 452 and its Control and Protection (C&P) module 456;
▪ A module 478 for converter cooling rooms, C&P and Platform Auxiliary (Not shown).

The first converter module 410 (which may be a positive or negative converter module) and the second converter module 412 (which may be a negative or positive converter module) are separate modules. Each of the first converter module 410 and second converter module 412 may comprise one or more converter valves 413a to 413f, valve reactors (not shown), DC switchgear (not shown) and DC cable termination (not shown).

The incoming AC switchgear module 454 is positioned at the geometrical, horizontal, centre of the second floor 405. The module 478 is positioned above the incoming AC switchgear module 454. The first converter module 410 and second converter module 412 are positioned at either side of the module 478 and the incoming AC switchgear module 454. In other words, the incoming AC switchgear module 454 is sandwiched between the first converter module 410 and second converter module 412. From one side of the second floor 405, the modules are arranged in the following order: 1) first converter module 410; 2) the module 478 and the incoming AC switchgear module 454; 3) second converter module 412.

The length of the first converter module 410 is the horizontal dimension of the first converter module 410 i.e., along the z axis. The width of the first converter module 410 is the horizontal dimension of the first converter module 410 i.e., along the x axis. The height of the first converter module 410 is the vertical dimension of the first converter module 410 i.e., vertically up the page of Figure 3a, i.e., along the y axis.

The length of the second converter module 412 is the horizontal dimension of the second converter module 412 i.e., along the z axis. The width of the second converter module 412 is the horizontal dimension of the second converter module 412 i.e., the x axis. The height of the second converter module 410 is the vertical dimension of the second converter module 410 i.e., vertically up the page of Figure 3a, i.e., along the y axis.

The length of the incoming AC Switchgear module 454 is the horizontal dimension of the incoming AC Switchgear module 454 i.e., along the z axis. The width of the incoming AC Switchgear module 454 is the horizontal dimension of incoming AC Switchgear module 454 i.e., along the x axis. The height of the incoming AC Switchgear module 454 is the vertical dimension of the incoming AC Switchgear module 454 i.e., vertically up the page of Figure 3a, i.e., along the y axis.

The first converter module 410 and the second converter module 412 may be positioned in a symmetrical butterfly arrangement on the second floor 405. The first converter module 410 and the second converter module 412 are positioned at the same elevation/level on the topside platform 402. Arranging the first converter module 410 and the second converter module 412 at the same elevation and in a symmetrical butterfly arrangement on the second floor 405 balances the load on the support structure 403 (e.g., platform jackets). In this arrangement, the length of the first converter module 410 and the second converter module 412 may define the width of overall topside platform 402. Furthermore, as the converter valve, reactors, DC switchgear and DC cable termination are combined in one module, hence this arrangement may also reduce the requirement for one or more wall bushing in the first converter module 410 and the second converter module 412. This arrangement tends to reduce the overall footprint of the first converter module 410 and the second converter module 412. The reduction in overall volume of the first converter module 410 and the second converter module 412 may also improve or facilitate air conditioning requirement for these rooms.

The length of the incoming AC switchgear module 454 may be the same or similar to the length of the first and second converter modules 410, 412. Placing the incoming AC switchgear module 454 in a longitudinal arrangement alongside of the first and second converter modules 410, 412 tends to reduce the overall footprint of the second floor 405 and tends to improve the connection to array cables which may be guided through cable rooms underneath the incoming AC switchgear module 454. Guiding the array cables through cable (pulling) rooms in the middle of topside platform 402 (and spread across the width of topside platform 402) may give more freedom to arrange J-tubes on the support structure 403 (e.g. jacket) legs and each simplify cable pulling.

The incoming AC switchgear module 454 is shown on the same floor (i.e. second floor 405) as the first and second converter modules 410, 412; however, in some embodiments, the incoming AC switchgear module 454 may be on a different floor to the first and second converter modules 410, 412.

In some embodiments, the topside platform 402 further may comprise a third floor 406 upon which the following module/rooms, electronic components and/or mechanical components are located:
▪ A first platform auxiliary module 472 which may comprise one or more of a Heating Ventilation and Air Conditioning (HVA/C), platform cooling system (seawater and freshwater systems) and/or a Low Voltage (LV) auxiliary system;
▪ A second platform auxiliary module 476 which may comprise one or more of a HVA/C platform cooling system and/or a LV auxiliary system;
▪ A module for incoming AC and/or DC cables 474. In some embodiments, the DC cables 474 may directly come into module 410 and 412.

The third floor 406 is underneath the second floor 405 (i.e. closer to the sea) to enable access to seawater (or freshwater) for platform cooling.

The module for incoming AC and/or DC cables 474 is positioned at the geometrical, horizontal, centre of the third floor 406. The first platform auxiliary module 472 and the second platform auxiliary module 476 are positioned at either side of the module for incoming AC and/or DC cables module 474. In other words, the module for incoming AC and/or DC cables 474 is sandwiched between the first platform auxiliary module 472 and the second platform auxiliary module 476. From one side of the third floor 406, the modules are arranged in the following order: 1) first platform auxiliary module 472; 2) module for incoming AC and DC cables module 474; 3) second platform auxiliary module 476.

Arranging the first floor 404, second floor 405 and third floor 406 of the topside platform 402 as shown in Figure 3a tends to reduce the overall footprint, volume and weight of the topside platform 402 compared to similar structures in the prior art. Furthermore, the arrangement tends to simplify the manufacturing/fabrication of the topside platform and tends to simplify the transport and installation of the topside platform 402 compared to similar structures in the prior art. The arrangement also tends to provide a more economical overall solution compared to similar structures in the prior art.

Positioning the first and second transformer modules 446, 448 and converter AC side switchgear module 434 on the first floor 404 further tends to reduce the overall volume and weight of the topside platform 402. The first floor 404 is above the second floor 405. The first and second transformer modules 446, 448 and converter AC side switchgear module 434 are placed on the top of the topside platform 402 such that they are outside of the main topside structure.

In some embodiments (as shown in Figure 3a), the first transformer module 446 is directly above module 478. In some embodiments (as shown in Figure 3a), the second transformer module 448 is also directly above the module 478.

In some embodiments, the combined length of the first and second transformer modules 446, 448 and converter AC side switchgear module 434 is the same or similar to the individual length of the first converter module 410 and/or the second converter module 412 and/or the incoming AC switchgear module 454.

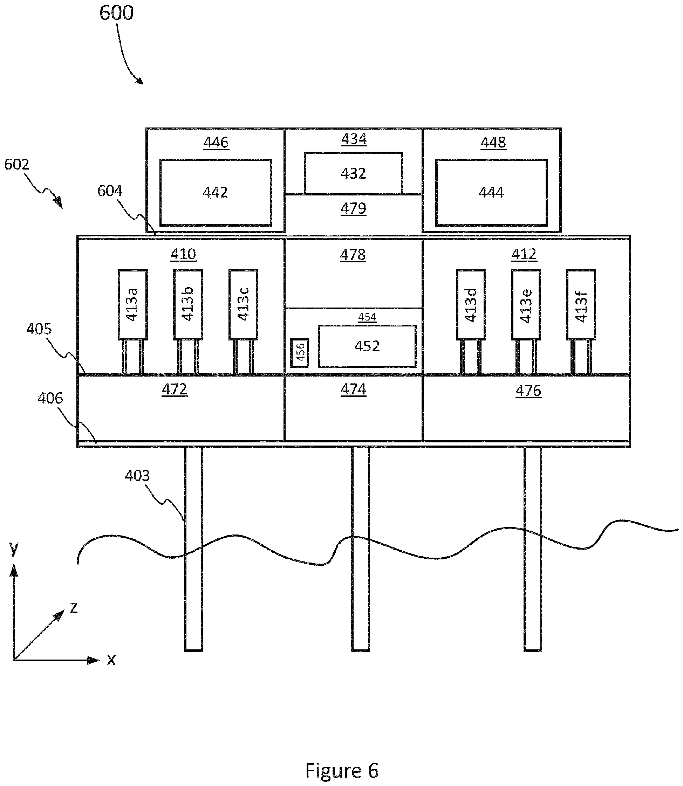

In some embodiments (for example, as shown in Figure 6), the first and second transformer modules 446, 448 and converter AC side switchgear module 434 can be arranged at the centre of the topside platform 402 and along the length of the incoming AC switchgear module 454. The converter AC side switchgear module 434 may be positioned in the middle of the first transformer module 446 and second transformer module 448 on the first floor 404. This arrangement improves the connections between the converter AC side switchgear module 434 and the first and second transformer modules 446, 448. In addition, this arrangement improves the connections between the converter AC side switchgear module 434 and the first and second converter modules 410, 412.

In some embodiments, the first and second transformer modules 446, 448 are formed as part of main structure of the topside platform 402. This may lower the center of gravity (and/or centre of mass) of the topside platform 402.

In some embodiments, the first transformer module 446 may be directly above the first converter module 410. In some embodiments, the second transformer module 448 may be directly above the second converter module 412.

In some embodiments, the first and second transformer modules 446, 448 are formed as part of the main structure of the topside platform 402. This may lower the center of gravity (and/or centre of mass) of the topside platform 402.

In some embodiments, the position of the first and second transformer modules 446, 448 and converter AC side switchgear 446 may be chosen to improve the structural design and center of gravity (and/or centre of mass) to allow easy transportation and installation of the first and second transformer modules 446, 448 and converter AC side switchgear 446.

The AC line side connection between the incoming AC switchgear module 454 and the first and second transformer modules 446, 448 may be provided through a Gas Insulated Bus (GIB). The GIB may be run through dedicated ducts from incoming AC switchgear module 454 to the top of the topside platform 402. However, connection through cables is also possible.

In some embodiments, the module 478 comprises converter cooling rooms and C&P components. The module 478 is arranged on top of the incoming AC switchgear module 454 which tends to improve the interface with the first and second converter modules 410, 412. This tends to reduce the complexity of the cooling pipes and fibre optics running from the module 478 (which comprises converter cooling rooms and C&P components) to the first and second converter modules 410, 412. In some embodiments, the module 478 may further comprise additional auxiliary equipment/rooms.

In some embodiments, the first floor 404 may comprise one or more of additional platform accessories, water to air coolers, diesel generators, telecommunication rooms, filters and grounding reactors.

Figure 3b shows a perspective view of a first floor of the offshore HVDC converter platform in Figure 3a, indicated generally by reference numeral 490, according to one or more embodiments.

The perspective view 490 comprises a first floor 490 comprises the first floor 404 of topside platform 402; described above in relation to Figure 3a. The first floor 404 comprises the following module/rooms, electronic components and/or mechanical components are positioned:
▪ A first transformer module 446 comprising a first transformer 442;
▪ A second transformer module 448 comprising a second transformer 444;
▪ A converter AC side switchgear module 434 comprising a converter AC side Switchgear 432; and
▪ A module or space 479 which may be below the converter AC side switchgear module 434 and may be used for platform auxiliary components.

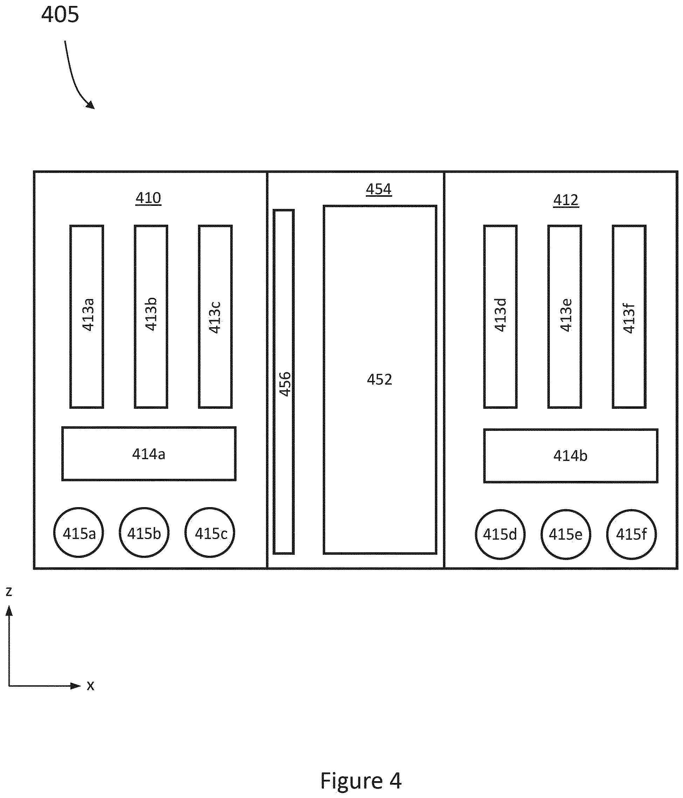

Figure 4 shows a plan view of the second floor 405 of offshore HVDC converter platform 400, according to one or more embodiments.

The length of the topside platform is the horizontal dimension of the topside platform i.e., horizontally across the page of Figure 4 i.e., along the x axis. The width of the topside platform is the horizontal dimension of the topside platform i.e., vertically up the page of Figure 4, i.e., along the z axis.

The length of the first converter module 410 is the horizontal dimension of the first converter module 410 i.e., vertically up the page of Figure 4, i.e., along the z axis. The width of the first converter module 410 is the horizontal dimension of the first converter module 410 i.e., horizontally across the page of Figure 4, i.e., along the x axis.

The length of the second converter module 412 is the horizontal dimension of the second converter module 412 i.e., vertically up the page of Figure 4, i.e., along the z axis. The width of the second converter module 412 is the horizontal dimension of the second converter module 412 i.e., horizontally across the page of Figure 4, i.e., along the x axis.

The length of the incoming AC Switchgear module 454 is the horizontal dimension of the incoming AC Switchgear module 454 i.e., vertically up the page of Figure 4, i.e., along the z axis. The width of the incoming AC Switchgear module 454 is the horizontal dimension of incoming AC Switchgear module 454 i.e., horizontally across the page of Figure 4, i.e., along the x axis.

The second floor 400 comprises a first converter module 410, an incoming AC switchgear module 454 and a second converter module 412.

The first converter module 410 comprises a first converter valve 413a, a second converter valve 413b and a third converter valve 413c. The first converter module 410 further comprises a first DC switchgear 414a. The first converter module 410 further comprises a first valve reactor 415a, a second valve reactor 415b and a third valve reactor 415c.

The second converter module 412 comprises a fourth converter valve 413d, a fifth converter valve 413e and a sixth converter valve 413f. The second converter module 412 further comprises a second DC switchgear 414b. The second converter module 412 further comprises a fourth valve reactor 415d, a fifth valve reactor 415e and a sixth valve reactor 415f.

The incoming AC switchgear module 454 comprises an incoming AC switchgear 452 and its incoming AC switchgear C&P 456.

The incoming AC switchgear 452 and the incoming AC switchgear C&P 456 are positioned (along their length) parallel to each other and positioned at the centre of the second floor 400.

The length of the first converter module 410 and second converter 412 are the same (or similar) to the length of the incoming AC switchgear module 454. The first converter module 410 and second converter 412 are positioned (along their length) parallel to the incoming AC switchgear module 454. Furthermore, the first converter module 410 and second converter 412 are positioned either side of the incoming AC switchgear module 454.

The arrangement of the modules and components shown in second floor 400, may further improve the structural design of the topside platform by shifting the loads of the first and second transformer modules onto the main centre beams of the topside platform.

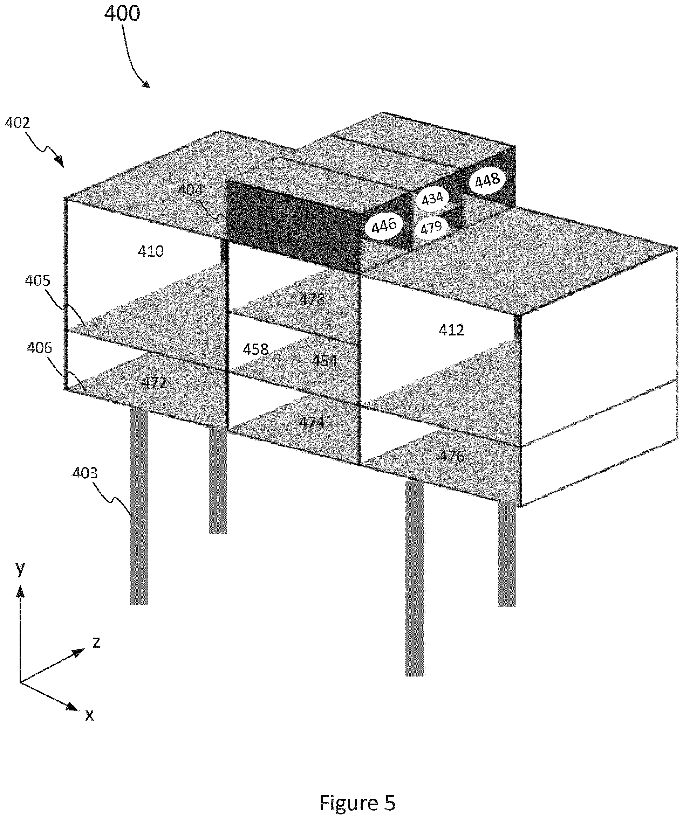

Figure 5 shows a perspective view of the offshore HVDC converter platform 400 in Figure 3a.

Figure 6 shows an elevation view of an offshore HVDC converter platform, indicated generally by reference numeral 600, according to one or more embodiments. According to some embodiments, the offshore HVDC converter platform 600 is a VSC HVDC symmetrical monopole offshore converter station 200 described above in relation to Figure 2.

The offshore HVDC converter platform 600 comprises a topside platform 602 mounted onto a support structure 403. The support structure 403 may be a platform jacket attached to or anchored to the sea floor.

The length of the topside platform 602 is the horizontal dimension of the topside platform 602 i.e., horizontally across the page of Figure 6, i.e., along the x axis. The width of the topside platform 602 is the horizontal dimension of the topside platform 602 i.e., into the page of Figure 6, i.e., along the z axis. The height of the topside platform 602 is the vertical dimension of the topside platform 602 i.e., the vertically up the page of Figure 6, i.e., along the y axis.

The topside platform 602 comprises a first floor 604 upon which the following module/rooms, electronic components and/or mechanical components (which are the same as the corresponding module/rooms, electronic components and/or mechanical components described in relation to Figure 3a to Figure 5) are positioned:
▪ A first transformer module 446 comprising a first transformer 442;
▪ A second transformer module 448 comprising a second transformer 444;
▪ A converter AC side switchgear module indicated by reference numeral 434 comprising a converter AC side Switchgear indicated by reference numeral 432; and
▪ A module or space indicated by reference numeral 479 which may be below the converter AC side switchgear module 434 and may be used for platform auxiliary components.

The converter AC side switchgear module 434 is positioned at the geometrical, horizontal, centre of the first floor 604. The first transformer module 446 and second transformer module 448 are positioned at either side of the converter AC side switchgear module 434. In other words, the converter AC side switchgear module 434 are sandwiched between the first transformer module 446 and second transformer module 448. From one side of the first floor 604, the modules are arranged (along the x axis) in the following order: 1) first transformer module 446; 2) the converter AC side switchgear module 434; 3) the second transformer module 448.

The length of the first transformer module 446 is the horizontal dimension of the first transformer module 446 i.e., along the x axis. The width of the first transformer module 446 is the horizontal dimension of the first transformer module 446 i.e., along the z axis. The height of the first transformer module 446 is the vertical dimension of the first transformer module 446 i.e., vertically up the page of Figure 6, i.e., along the y axis.

The length of the second transformer module 448 is the horizontal dimension of the second transformer module 448 i.e., along the x axis. The width of the second transformer module 448 is the horizontal dimension of the second transformer module 448 i.e., along the z axis. The height of the second transformer module 448 is the vertical dimension of the second transformer module 448 i.e., vertically up the page of Figure 6, i.e., along the y axis.

The length of the converter AC side switchgear module 434 is the dimension of the converter AC side switchgear module 434 i.e., along the x axis. The width of the converter AC side switchgear module 434 is the horizontal dimension of converter AC side switchgear module 434 i.e., along the z axis. The height of the converter AC side switchgear module 434 is the vertical dimension of the converter AC side switchgear module 434 i.e., vertically up the page of Figure 6, i.e., along the y axis.

The topside platform 402 further comprises a second floor 405 which is the same as second floor 405 described above in relation to Figure 3a to Figure 5.

In some embodiments, the topside platform 402 further may comprise a third floor 406 which is the same as third floor 406 described above in relation to Figure 3a to Figure 5.

Arranging the first floor 604, second floor 405 and third floor 406 of the topside platform 602 as shown in Figure 6 tends to reduce the overall footprint, volume and weight of the topside platform 602 compared to similar structures in the prior art. Furthermore, the arrangement tends to simplify the manufacturing/fabrication of the topside platform and tends to simplify the transport and installation of the topside platform 602 compared to similar structures in the prior art. The arrangement also tends to provide a more economical overall solution compared to similar structures in the prior art.

Positioning the first and second transformer modules 446, 448 and converter AC side switchgear module 434 on the first floor 604 further tends to reduce the overall volume and weight of the topside platform 602. The first floor 604 is above the second floor 405. The first and second transformer modules 446, 448 and converter AC side switchgear module 434 are placed on the top of the topside platform 602 such that they are outside of the main topside structure.

In some embodiments, the first and second transformer modules 446, 448 are formed as part of main structure of the topside platform 602. This may lower the center of gravity (and/or centre of mass) of the topside platform 602.

In some embodiments, the first and second transformer modules 446, 448 are formed as part of the main structure of the topside platform 602. This may lower the center of gravity (and/or centre of mass) of the topside platform 602.

In some embodiments, the first floor 604 may comprise one or more of additional platform accessories, water to air coolers, diesel generators, telecommunication rooms, filters and grounding reactors.

In a first aspect, a topside platform for a voltage source converter high voltage direct current (VSC HVDC) symmetrical monopole offshore converter station, the topside platform comprises: a first floor and a second floor, an incoming AC switchgear module and first and second transformer modules, wherein the incoming AC switchgear module is configured to distribute a first alternating current (AC) signal from an AC grid to the first and second transformer modules, wherein the first and second transformer modules are arranged on the first floor of the topside platform and are configured to transform the first AC signal into a second AC signal; and first and second converter modules configured to convert the second AC signal into a direct current (DC) signal for a DC circuit, wherein the first and second converter modules are positioned on the second floor of the topside platform, wherein the incoming AC switchgear module is positioned between the first and second converter modules.

Accordingly, the topside platform in the first aspect has a reduced overall footprint, volume and weight. Furthermore, the topside platform is easier to fabricate, transport and install thereby providing a more economical overall solution.

The centre of mass of the first and second converter modules may be substantially vertically aligned with the centre of mass of the topside platform.

The topside platform may be part of a support structure. The topside platform may be mounted on top of a support structure. The support structure may be a platform jacket. The support structure may be designed to keep the VSC HVDC station relatively stable on or relative to the sea floor. The support structure may comprise a fixed platform attached to the sea floor, a floating platform or a gravity-based structure. The topside platform may comprise a plurality of floors.

The vertical direction may be relative to the sea floor. The topside platform may be arranged on top of a support structure. The vertical direction may be relative to the topside platform.

The incoming AC switchgear may receive the first AC signal from an AC grid, such as a utility grid or a generator. The alternating current (AC) grid may be on windfarm offshore grid. The incoming AC switchgear module may direct the first AC signal from the AC grid to the first and/or second transformer modules.

The incoming AC switchgear may control the distribution of the power from the first AC signal within the first and second transformer modules. The incoming AC switchgear may comprise one or more of circuit breakers, disconnect switches, fuses, surge arresters, current transformers, and voltage transformers.

The first and second transformer modules may each comprise a transformer configured to transform the voltage of the first AC signal. The first or second transformer modules may increase the voltage of the first AC signal. The second AC signal may have a higher voltage than the first AC signal. The first or second transformer modules may decrease the voltage of the first AC signal. The second AC signal may have a lower voltage than the first AC signal.

The first and second converter modules may each comprise electrical equipment for converting the second AC signal into the DC signal. The first and second converter modules may work as a rectifier or an inverter.

The DC signal may be a positive DC signal. The DC signal may be a negative DC signal.

The first converter module may be a positive converter module and the second converter module may be a negative converter module. The first converter module may be a negative converter module and the second converter module may be a positive converter module.

The first converter module may be positioned on the same floor/level of the topside platform as the second converter module. The first converter module may be positioned on the same horizontal plane as the second converter module. The first converter module may be coplanar with the second converter module.

The first converter module and the second converter module may both be positioned on the second floor of the topside platform such that the centre of mass of first converter module and second converter module is substantially vertically aligned with the centre of mass of the topside platform.

The first converter module and second converter module may be arranged symmetrically about a vertical axis, wherein the vertical axis may be substantially perpendicular to the second floor of the topside platform.

The first converter module and second converter module may be arranged such that the load/weight of the first converter module and second converter module is balanced laterally (horizontally) over the topside platform.

The vertical axis may traverse through the centre of mass of the topside platform. The vertical axis may traverse through the centroid of the second floor of the topside platform. The vertical axis may overlap with the centre of mass of the topside platform. The vertical axis may overlap with the centroid of the second floor of the topside platform.

The centre of mass of the first and second converter modules may be the centre of mass of their combined mass and relative position. The centre of mass of the first and second converter modules may not be the centre of mass of the first converter module and (separately) the centre of mass of the second converter module.

The length of the first converter module and/or the length of the second converter module may be substantially the width of the topside platform.

The first and second converter modules may each comprise one or more of a converter valve, valve reactors, DC switchgear, and/or DC transmission termination.

The first converter module and the second converter module may be physically separate modules. This improves the overall footprint of the first converter module and the second converter module on the topside platform. In addition, it may reduce the need of wall bushings between the first converter module and the second converter module.

The first converter module and the second converter module may be separated on the second floor. There may be a gap in between the first converter module and the second converter module. The width of the gap may be at least the width of the incoming AC switchgear module. The incoming AC switchgear module may be arranged within the gap.

The first converter module may be adjacent to the incoming AC switchgear module. The second converter module may be adjacent to the incoming AC switchgear module.

The first and second transformer modules may not vertically overlap with the first and second converter modules.

The first and second transformer modules may be positioned on a first floor of the topside platform such that the centre of mass of the first and second transformer modules is substantially vertically aligned with the centre of mass or centre of gravity or geometrical centre of the topside platform. The weight of the first and second transformer modules may be at the centre of the topside platform.

In some embodiments, the first floor and second floor are positioned vertically separated on the topside platform.

The topside platform may comprise a plurality of floors. Each floor of the plurality of floors may be positioned at a different elevation (relative to the sea floor) on the topside platform. Each floor of the plurality of floors may be arranged at a separate elevation (relative to the sea floor) on the topside platform. Each floor of the plurality of floors may not vertically overlap with another floor of the plurality of floors. The first floor may be arranged at a separate elevation (relative to the sea floor) to the second floor on the topside platform. The first floor may be at a higher elevation (relative to the sea floor) to the second floor on the topside platform. The base of the first floor may form the top of the second floor. The first floor may be on a first horizontal plane. The second floor may be on a second horizontal plane. The first horizontal plane may be vertically separated from the second horizontal plane. The first floor may not vertically overlap with the second floor.

The first and second transformer modules may not vertically overlap with the first and second converter modules. The first and second transformer modules may be positioned on a first floor of the topside platform such that the centre of mass of first transformer module and second transformer module is substantially vertically aligned with the centre of mass or centre of gravity or the geometrical centre of the topside. The weight of the first and second transformer modules may be positioned in centre of the topside.

The first floor may be arranged at a higher elevation to the second floor on the topside platform. The first floor may be on top of the second floor. The first floor may be physically separated from the second floor. The first floor may not overlap with the second floor. The base of the first floor may be adjacent to the top of the second floor.

In some embodiments, the incoming AC switchgear module is positioned on the second floor of the topside platform.

The incoming AC switchgear module may be positioned on the same floor/level as the first converter module and/or second converter module of the topside platform. The incoming AC switchgear module may be positioned on the same horizontal plane as the first converter module and/or second converter module. The incoming AC switchgear module may be coplanar with the first converter module and/or second converter module.

The incoming AC switchgear module may be positioned on the second floor. The incoming AC switchgear module may be positioned on a different floor level to the first converter module and/or second converter module.

The first converter module may be positioned at one side of the second floor. The second converter module may be positioned at the opposite side (to the first converter module) of the second floor. The incoming AC switchgear module may be positioned between (i.e. in the middle of) the first converter module and the second converter module on the second floor. The incoming AC switchgear module may be positioned in a longitudinal arrangement with the first converter module and the second converter module on the second floor. The incoming AC switchgear module may be positioned between (i.e. in the middle of) the first converter module and the second converter module on the first floor. The incoming AC switchgear module may be positioned in a longitudinal arrangement with the first converter module and the second converter module on the first floor.

In some embodiments, the centre of mass of the incoming AC switchgear module is substantially vertically aligned with the centre of mass of the topside platform.

The centre of mass of the incoming AC switchgear module may be substantially vertically aligned with the centre of mass of the topside platform. The centre of gravity of the incoming AC switchgear module may be substantially vertically aligned with the centre of gravity of the topside platform. The weight of the incoming AC switchgear may be substantially in the middle of the topside platform.

In some embodiments, the length of the incoming AC switchgear module is parallel to the length of the first converter module and/or the second converter module.

The incoming AC switchgear module may be parallel to the first converter module and/or the second converter module on the topside platform (i.e. in longitudinal arrangement alongside of the first converter module and second converter module). The length of the incoming AC switchgear module may be substantially similar to the first converter module and/or the second converter module. Providing an incoming AC switchgear module that is positioned between and parallel to the first converter module and the second converter module on the topside platform further reduces the footprint of the apparatus on the topside platform. In addition, the incoming AC switchgear module being between (i.e. in the middle of) the first and second converter rooms, improves the connection to array cables (which may be pulled through cable rooms beneath the incoming AC switchgear module) and provides more freedom to arrange J-tubes on the jacket legs and each cable pulling.

The incoming AC switchgear module may be positioned along a horizontal axis that intersects the centre of mass of the topside platform.

The incoming AC switchgear module may be positioned along a horizontal axis that intersects the centroid of the second floor of the second floor of the topside platform.

The length of the incoming AC switchgear module may be positioned along the horizontal axis. The length of the incoming AC switchgear module may be positioned along a horizontal axis that intersects the centre of mass of the topside platform.

The incoming AC switchgear module may be positioned such that the length of the incoming AC switchgear module is substantially parallel to the length of the first converter module and/or the second converter module on the topside platform.

In some embodiments, the centre of mass of the first and second transformer modules is substantially vertically aligned with the centre of mass of the topside platform.

The centre of gravity of the first and second transformer modules may be aligned with the geometrical centre of the topside.

The first and second transformer modules may not be arranged directly above the first and second converter module, but arranged above the incoming switchgear such that the connection from incoming AC switchgear to transformer is easy and short. Additionally, in this arrangement the weight of transformer modules are in the centre of the topside. The first and second transformer modules may be arranged directly above the first and second converter modules respectively. The first and second transformer module may be arranged directly above the second and first converter module respectively.

In some embodiments, the centre of mass of the first transformer module and the centre of mass of the second transformer module are substantially vertically aligned with the centre of mass of the incoming AC switchgear module.

The first transformer module and the second transformer module may be positioned directly above the incoming AC switchgear module.

In a first vertical plane, the centre of mass of the first transformer module may be aligned with the centre of mass of the incoming AC switchgear module. In a second vertical plane, the centre of mass of the second transformer module may be aligned with the centre of mass of the incoming AC switchgear module.

In a horizontal plane, the first transformer module and the second transformer module may be positioned symmetrically about the centre of mass or centre of gravity or weight of the topside platform.

In some embodiments, the topside platform further comprises a converter AC side switchgear module positioned between the first transformer module and the second transformer module.

The converter AC side switchgear module may be configured to distribute the second AC signal from the first and second transformer module to the first and second converter module.

The converter AC side switchgear may comprise one or more of circuit breakers, disconnect switches, surge arresters, or control systems.

The converter AC side switchgear may be arranged on the first floor of the topside platform.

The converter AC side switchgear may be arranged on the second floor of the topside platform.

The centre of mass of the converter AC side switchgear may be substantially vertically aligned with the centre of mass of the topside platform.

In some embodiments, the converter AC switchgear module is positioned on the first floor of the topside platform.

In some embodiments, the centre of mass of the converter AC side switchgear is substantially vertically aligned with the centre of mass of the topside platform.

In some embodiments, the topside platform further comprises a first platform auxiliary module positioned on a third floor of the topside platform.

The first platform auxiliary module may comprise a platform mechanical auxiliary system. The mechanical auxiliary system may be positioned where seawater system, freshwater system, and/or HVA/C (Heating, ventilation, and air conditioning) system is installed. The first platform auxiliary module may comprise a platform electrical auxiliary system. The electrical auxiliary system may be positioned where MV (Medium Voltage) and LV (Low Voltage) auxiliary system is installed.

The third floor may be positioned at a separate elevation (relative to the sea floor) to the first floor on the topside platform. The third floor may be arranged at a separate elevation (relative to the sea floor) to the second floor on the topside platform. The top of the third floor may form the base of the second floor. The third floor may be on a third horizontal plane. The third horizontal plane may be vertically separated from the first horizontal plane. The third horizontal plane may be vertically separated from the second horizontal plane. The third floor may not vertically overlap with the first floor. The third floor may not vertically overlap with the second floor.

In some embodiments, the topside platform further comprises a second platform auxiliary module arranged on the third floor of the topside platform.

The second platform auxiliary module may comprise a platform mechanical auxiliary system. The mechanical auxiliary system may be positioned where seawater, freshwater is installed. The second platform auxiliary module may comprise a platform electrical auxiliary system. The electrical auxiliary system may be positioned where HVA/C and LV auxiliary system is installed.

In some embodiments, the centre of mass of the first platform auxiliary module is substantially vertically aligned with the centre of mass of the first converter module and the centre of mass of the second platform auxiliary module is substantially vertically aligned with the centre of mass of the second converter module or vice versa.

In some embodiments, the topside platform further comprises a converter cooling module positioned above or below the incoming AC switchgear module.

The converter cooling module may be arranged vertically above the incoming AC switchgear module.

The converter cooling module may be arranged in between the first converter module and the second converter module. The centre of mass of the converter cooling module may be substantially vertically aligned with the centre of mass of the incoming AC switchgear module. The converter cooling module may be positioned at the geometric centre of the first floor. The converter cooling module may be arranged at the centre of mass of the topside platform. The converter cooling module may be arranged at the centroid of the first floor. The converter cooling module may overlap with the geometric centre of the first floor. The converter cooling module may overlap with the centre of mass of the topside platform. The converter cooling module may overlap with the centroid of the first floor. This may improve the interface with converter rooms. This may further improve the cooling pipes running from the converter cooling module to the first converter room and/or second converter room.

In some embodiments, the topside platform further comprises a control and protection module positioned on the second floor of the topside platform adjacent to or directly above the incoming AC switchgear module.

The control and protection module may be positioned on the same floor/level of the topside platform as the first converter module and/or second converter module. The control and protection module may be positioned on the same horizontal plane as the first converter module and/or second converter module. The control and protection module may be coplanar with the first converter module and/or second converter module.

The control and protection module may be positioned at the centroid of the second floor of the topside platform. The control and protection module may be positioned at the geometric centre of the second floor of the topside platform. The centre of mass of the control and protection module may be substantially vertically aligned with the centre of mass of the topside platform. The centre of mass of the control and protection module may overlap with the centroid of the second floor of the topside platform. The centre of mass of the control and protection module may overlap with the geometric centre of the second floor of the topside platform. The centre of mass of the control and protection module may overlap with the centre of mass of the topside platform.

The control and protection module may be positioned directly above the incoming AC switchgear module.

The control and protection module may be used to control and protect the incoming AC switchgear and HVDC converter system (Converter Modules, Transformer Modules Converter Cooling and Auxiliary System). Having this on the second floor, almost in middle of every other modules, may improve the interface with other modules, hence reduce the length of the control cables. This tends to reduce the complexity of the fibre optics running from the control and protection module to the positive converter room and/or negative converter room.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A topside platform (402) for a voltage source converter high voltage direct current, VSC HVDC, symmetrical monopole offshore converter station, the topside platform (402) comprising:
a first floor (404) and a second floor (405), an incoming AC switchgear module (454) and first and second transformer modules (446, 448), wherein the incoming AC switchgear module (454) is configured to distribute a first alternating current, AC, signal from an AC grid to the first and second transformer modules (446, 448), wherein the first and second transformer modules (446, 448) are arranged on the first floor (404) of the topside platform (402) and are configured to transform the first AC signal into a second AC signal; and
first and second converter modules (410, 412) configured to convert the second AC signal into a direct current, DC, signal for a DC circuit, wherein the first and second converter modules (410, 412) are positioned on the second floor (405) of the topside platform (402), wherein the incoming AC switchgear module (454) is positioned between the first and second converter modules (410, 412).

2. The topside platform (402) according to claim 1, wherein the centre of mass of the first and second converter modules (410, 412) is substantially vertically aligned with the centre of mass of the topside platform (402).

3. The topside platform (402) according to any preceding claim, wherein the first floor (404) and second floor (405) are positioned vertically separated on the topside platform (402).

4. The topside platform (402) of any preceding claim, wherein the incoming AC switchgear module (454) is positioned on the second floor (405) of the topside platform (402).

5. The topside platform (402) of any preceding claim, wherein the centre of mass of the incoming AC switchgear module (454) is substantially vertically aligned with the centre of mass of the topside platform (402).

6. The topside platform (402) of any preceding claim, wherein the length of the incoming AC switchgear module (454) is parallel to the length of the first converter module (410) and/or the second converter module (412).

7. The topside platform (402) of any preceding claim, wherein the centre of mass of the first and second transformer modules (446, 448) is substantially vertically aligned with the centre of mass of the topside platform (402).

8. The topside platform (402) of any preceding claim, wherein the centre of mass of the first transformer module (446) and the centre of mass of the second transformer module (448) are substantially vertically aligned with the centre of mass of the incoming AC switchgear module (454).

9. The topside platform (402) of any preceding claim, further comprising a converter AC side switchgear module (434) positioned between the first transformer module (446) and the second transformer module (448).

10. The topside platform (402) of claim 9, wherein the converter AC switchgear module (434) is positioned on the first floor (404) of the topside platform (402).

11. The topside platform (402) of claim 9 or claim 10, wherein the centre of mass of the converter AC side switchgear (434) is substantially vertically aligned with the centre of mass of the topside platform (402).

12. The topside platform (402) of any preceding claim, further comprising a first platform auxiliary module (472) positioned on a third floor (406) of the topside platform (402).

13. The topside platform (402) of claim 12, further comprising a second platform auxiliary module (476) arranged on the third floor (406) of the topside platform (402).

14. The topside platform (402) of claim 13, wherein the centre of mass of the first platform auxiliary module (472) is substantially vertically aligned with the centre of mass of the first converter module (410) and the centre of mass of the second platform auxiliary module (476) is substantially vertically aligned with the centre of mass of the second converter module (412) or vice versa.

15. The topside platform (402) of any preceding claim, further comprising a AC and/or DC cables module (474) positioned below the incoming AC switchgear module (454).
